(19) Europäisches Patentamt
European Patent Office
Office européen des brevets

(11) **EP 2 026 085 B1**

(12) **EUROPEAN PATENT SPECIFICATION**

(45) Date of publication and mention
of the grant of the patent:
**07.03.2012 Bulletin 2012/10**

(51) Int Cl.:
*G01S 19/43* (2010.01)　　*G01S 19/05* (2010.01)
*G01S 19/04* (2010.01)　　*G01S 19/51* (2010.01)
*G01S 5/00* (2006.01)

(21) Application number: **08105822.4**

(22) Date of filing: **21.10.2004**

(54) **Providing carrier-phase measurements upon request for satellite based positioning**

Zurverfügungstellung von Trägerphasenmessungen auf Anfrage zur Positionsbestimmung auf Satellitenbasis

Mise à disposition des mesures de phase porteuse sur demande pour un positionement par satellite

(84) Designated Contracting States:
**AT BE BG CH CY CZ DE DK EE ES FI FR GB GR HU IE IT LI LU MC NL PL PT RO SE SI SK TR**

(43) Date of publication of application:
**18.02.2009 Bulletin 2009/08**

(62) Document number(s) of the earlier application(s) in accordance with Art. 76 EPC:
**04769692.7 / 1 802 991**

(73) Proprietor: **Nokia Corporation**
**02150 Espoo (FI)**

(72) Inventors:
• **Sairo, Hanna**
**33900, Tampere (FI)**
• **Syrjarinne, Jari**
**33700, Tampere (FI)**

(74) Representative: **Cohausz & Florack**
**Patent- und Rechtsanwälte**
**Partnerschaftsgesellschaft**
**Bleichstraße 14**
**40211 Düsseldorf (DE)**

(56) References cited:
**WO-A-2004/063763　　WO-A1-99/57573**
**US-A- 5 519 620**

**Description**

FIELD OF THE INVENTION

The invention relates to a satellite based positioning.

BACKGROUND OF THE INVENTION

Currently there are two operating satellite based positioning systems, the American system GPS (Global Positioning System) and the Russian system GLONASS (Global Orbiting Navigation Satellite System). In the future, there will be moreover a European system called GALILEO. A general term for these systems is GNSS (Global Navigation Satellite System).

The constellation in GPS for example, consists of more than 20 satellites that orbit the earth. Each of the satellites transmits two carrier signals L1 and L2. One of these carrier signals L1 is employed for carrying a navigation message and code signals of a standard positioning service (SPS). The L1 carrier phase is modulated by each satellite with a different C/A (Coarse Acquisition) code. Thus, different channels are obtained for the transmission by the different satellites. The C/A code is a pseudo random noise (PRN) code, which is spreading the spectrum over a 1 MHz bandwidth. It is repeated every 1023 bits, the epoch of the code being 1 ms. The carrier frequency of the L1 signal is further modulated with navigation information at a bit rate of 50 bit/s. The navigation information comprises in particular ephemeris and almanac parameters. Ephemeris parameters describe short sections of the orbit of the respective satellite. Based on these ephemeris parameters, an algorithm can estimate the position of the satellite for any time while the satellite is in the respective described section. The almanac parameters are similar, but coarser orbit parameters, which are valid for a longer time than the ephemeris parameters.

A GPS receiver of which the position is to be determined receives the signals transmitted by the currently available satellites, and it detects and tracks the channels used by different satellites based on the different comprised C/A codes. Then, the receiver determines the time of transmission of the code transmitted by each satellite, usually based on data in the decoded navigation messages and on counts of epochs and chips of the C/A codes. The time of transmission and the measured time of arrival of a signal at the receiver allow determining the time of flight required by the signal to propagate from the satellite to the receiver. By multiplying this time of flight with the speed of light, it is converted to the distance, or range, between the receiver and the respective satellite.

The computed distances and the estimated positions of the satellites then permit a calculation of the current position of the receiver, since the receiver is located at an intersection of the ranges from a set of satellites.

Similarly, it is the general idea of GNSS positioning to receive satellite signals at a receiver which is to be positioned, to measure the time it took the signals to propagate from an estimated satellite position to the receiver, to calculate therefrom the distance between the receiver and the respective satellite and further the current position of the receiver, making use in addition of the estimated positions of the satellites.

Usually, a PRN signal which has been used for modulating a carrier signal is evaluated for positioning, as described above for GPS. The accuracy of such a positioning lies typically between 5 meters and 100 meters.

In an alternative approach known as Real Time Kinematics (RTK), the phase of the carrier signal is evaluated for supporting a relative positioning between two receivers. One of the receivers is a user receiver which is to be positioned, while the other receiver is a reference receiver arranged at a known location. The location of the reference receiver is known very precisely. A positioning based on the phase of the carrier signal is in fact a relative positioning between these two receivers. It is based on both, carrier measurements and PRN code measurements, which are used to form double difference observables. A double difference observable relating to the carrier phase is the difference in the carrier phase of a specific satellite signal at both receivers compared to the difference in the carrier phase of another satellite signal at both receivers. A double difference observable relating to the PRN code is obtained correspondingly. Different errors in the satellite signals, for example errors due to noise levels, atmospheric distortions, a multipath environment and satellite geometry, are cancelled out when considering only difference values for two receivers and different satellites. The double difference observables can then be employed for determining the position of the receivers relative to each other. The determined relative position can further be converted into an absolute position, since the location of the reference position is accurately known. Evaluating the carrier phase requires computationally challenging tasks to be accomplished, but it enables a positioning with an accuracy on a centimeter or decimeter level.

While many error sources are cancelled out when forming double differences, integer ambiguities remain in the carrier phase observables. Resolving these ambiguities is the most computationally burdening and time-consuming task in the described carrier phase based positioning when used with single-frequency receivers. The described carrier phase based positioning can be accelerated significantly by evaluating signals with different carrier frequencies, for example L1 and L2 in GPS, since using multiple frequencies decreases the computational load related to the carrier phase based positioning.

Originally, such a carrier phase based positioning has been used primarily by geodetic users, who are often equipped with two-frequency receivers. Users who employ a GNSS positioning for personal use, however, have mostly only single-frequency receivers available.

A relative positioning of GNSS receivers making use of double difference observables has been described for example in U.S. patent 6,229,479 B1.

Document WO 2004/063763 describes a system for transferring data in an emergency 911/cellular phone environment, in which a personal and asset location system (PALS) request is initiated via a wireless carrier based on an approximate position of the cellular phone. A centralized server transmits a PALS initialization packet (PIP) reply to the wireless carrier and the PIP is relayed to the cellular phone. The cellular phone transfers satellite PN code phases from visible satellites to the wireless carrier. The wireless carrier forwards the satellite PN code phases to the centralized server.

Document US 5,519,620 describes a system which comprises a fixed and a roving pair of four-observable satellite navigation receivers and a communication link between them for double differencing code and carrier measurements.

SUMMARY OF THE INVENTION

The invention extends the usability of relative positioning. The invention is defined by the appended set of claims.

I.

According to a first aspect, an assembly is proposed which comprises a GNSS system receiver adapted to receive signals from at least one satellite, and a wireless communication module adapted to access a wireless communication network and adapted to exchange with at least one other assembly information on satellite signals received by the GNSS receiver from at least one satellite for enabling a determination of a position of the assembly relative to at least one other assembly.

The first aspect is based on the consideration that there are cases in which a centimeter or decimeter level accuracy of a relative user position is desirable. The first aspect is based on the further consideration that on the one hand, such an accuracy cannot be achieved with single-frequency GNSS receivers. If the distance between two GNSS receivers is determined by subtracting the position information obtained for both receivers using a conventional GNSS positioning, typically an accuracy between 5 meters and 150 meters can be achieved. When trying, for instance, to locate a friend or a child in a crowd of people, however, this accuracy is not satisfactory. On the other hand, reference stations at precisely known locations, which would allow a more accurate relative positioning, are not globally available.

It is therefore proposed that an accurate relative positioning is enabled among wireless communication modules, which are coupled to a respective GNSS receiver.

It is an advantage of the first aspect that the exchange of information on satellite signals enables an accurate relative positioning of two or more assemblies. Available information on satellite signals from several receivers enables a distance measurement and a relative positioning with an accuracy on a centimeter or decimeter level. The relative position can be converted into an absolute position, if an accurate reference position is available. The proposed approach offers thus new options of positioning wireless communication module users who are provided with GNSS receivers. It requires no extra hardware. Only a communication between GNSS receivers and a processing of measurement data is required, at least the first one making use of the facilities offered by the wireless communication module.

In an embodiment of the first aspect , the assembly further comprises a processing component adapted to determine at least a position of the assembly relative to at least one other assembly by comparing measurements on signals received by the assembly and at least one other assembly, for instance by forming double differences as known in the art. The use of double differences cancels various errors in the satellite signals, as mentioned above. The required extra data processing load can be managed with current wireless communication modules during initialization. After a successful initialization, the data processing load required for a positioning is negligible. The processing component, which may also be realized as a dedicated module, may run for instance a positioning software. It may further run any other positioning related software, and even software which is not related to positioning.

Signals from one or more GNSS systems, like GPS, GALILEO and/or GLONASS, can be used for creating position information. The proposed comparison of satellite signals may be based for example on signals from different systems. Further, the GNSS receiver may be a multifrequency GNSS receiver so that a respective comparison may be performed for a plurality of frequencies. This reduces the effort for a possible integer ambiguity resolution.

In another embodiment of the first aspect, the processing component of the proposed assembly is adapted to use assistance data received from an external source for determining at least the relative position of the assembly. The assistance data can also be received from different sources.

On the other hand, the assembly may comprise a processing component which is adapted to generate assistance data for use by at least one other assembly, to which the assistance data is then transmitted.

In a further embodiment of the first aspect, the assembly comprises in addition at least one sensor. Such a sensor may provide measurement data for supporting a positioning of the assembly. A barometer, for example, could provide information on the current altitude of the assembly, which may be used for supporting position computations. An accelerometer or a gyroscope, for example, could provide measurement data which can be used in a GNSS receiver for a carrier cycle slip compensation.

In a further embodiment of the first aspect, the wireless communication module may be adapted to exchange information on satellite signals with at least one other assembly using a link via the wireless communication network, for instance a link of a cellular communication system. Such a wireless communication system link may comprise for example a data call connection or a packet switched connection, like a General Packet Radio Service (GPRS) connection, for which the data is inserted into data packages. The cellular link may comprise equally a short message (SMS) connection, a multimedia message (MMS) connection or a control channel connection. In the latter case, a part of the control channel capacity should be reserved for positioning messaging. Using a control channel for supporting the proposed positioning would render the positioning particularly fast.

A cellular link is the most convenient way to enable a communication between two or more assemblies.

Alternatively, however, a non-cellular link could be used as well, like a Wireless Local Area Network (WLAN) connection, a Bluetooth™ connection, an Ultra wideband (UWB) connection or an Infrared connection. Non-cellular links have the advantage that they minimize the load in a cellular system.

In open areas or outdoors, non-cellular links may be successful on a distance of up to hundreds of meters.

This range is sufficient for various relative positioning applications, like measuring the distance between the corners of a building, between people, for games, etc.

Since non-cellular links may have problems indoors or in shaded environments, however, it is also possible to enable the use of both, cellular and non-cellular links, in order to ensure that always the optimum communication between the involved assemblies can be selected.

An assembly may even establish simultaneously two or more connections using more than one type of connection. Thereby, it is possible to prevent errors or problems in certain communications and to minimize at the same time the load in a communication network. For example, some of the assemblies employed for participating in a game using a relative positioning could be connected via GPRS and others using WLAN or Bluetooth™.

The GNSS receiver and the wireless communication module of the assembly according to the first aspect of the invention can be integrated into a single device or be realized as separate devices. For example, the GNSS receiver may be attached as an accessory device to the wireless communication module. The attachment can be realized with any suitable data link, for example a fixed cable, a Bluetooth™ link, an UWB link or an Infrared link. An accessory GNSS receiver, on the one hand, can be implemented relatively easily. An integrated solution, on the other hand, is more comfortable for a user, as he/she only has to carry a single device.

Further, the GNSS receiver and the wireless communication module may use separate resources or one or more shared resources. For example, an antenna, an RF-frontend, a real-time clock, a reference oscillator and/or a battery could be realized as shared resources for a GNSS receiver and a wireless communication module. Concerning a possible shared reference frequency for an oscillator calibration for both components, it is referred to US patents 5,841,396, 6,002,363 and 5,535,432. Also the data processing which is required if the positioning calculations are to be carried out within the assembly may be realized with shared resources. Shared processing resources may be for instance resources of the wireless communication module, to which the GNSS receiver provides unprocessed measurement data.

In an exemplary implementation, the GNSS receiver comprises basically only an antenna and an RF-frontend, that is, the analog part of the GNSS signal processing. All remaining functionality, including for example signal acquisition, tracking, pseudo- and delta-range measuring, position calculation, etc., are carried out by software. The software may be run by a microprocessor like an ARM processor, or by a General Purpose processor like an INTEL® processor. It is also possible to use or share the processor in another module of the assembly, for instance in a cellular or non-cellular wireless communication module of the assembly.

The GNSS receiver can but does not have to be integrated into the same case with the wireless communication module. In an exemplary implementation, the GNSS receiver and the wireless communication module, for example a cellular engine, are integrated on the same printed wiring board (PWB). In an alternative exemplary implementation, the GNSS receiver is realized as a separate chip or chip set. In case of a chip set, one chip may be provided for instance for the required RF processing and one chip for the required baseband processing. If the GNSS receiver is realized as a separate chip or chip set, it may be connected to the wireless communication module via a hardware interface, like I2C, UART, SPI, etc.

In a further embodiment of the first aspect, the wireless communication module comprises an application program interface (API), which is adapted to enable a communication with the GNSS receiver. By means of the API, in particular the following functions can be carried out: forwarding data from the GNSS receiver to the wireless communication module, sending data to a stationary server and/or to another assembly, receiving data from a stationary server and/or from another assembly, controlling position computations in the assembly or at some other place, as far as position computations are needed, and/or controlling a memory storing data about received satellite signals.

A specific API has the advantage that it simplifies the controlling tasks in the assembly. Memory and data processing can be controlled more easily this way, and thus memory and time savings might be achieved.

The API can be realized in particular in software. Only little memory space is required for storing such an API software, for example less than one kilobit.

The GNSS receiver may send data in a specific format to the API, for instance in the RTCM format defined in "RTCM Recommended Standards for Differential GNSS Service", Version 2.2. January 15, 1998, by RTCM Special Committee No. 104, Radio Technical Commission For Maritime Services.

In a further embodiment of the first aspect, the assembly comprises a processing component which is adapted to store information relating to satellite signals received by the assembly or by another assembly in a storage component. The storage component can be for instance part of a removable media, part of the wireless communication module or part of the GNSS receiver. The storage component can be rather small, it may provide for example a memory of less than 1 kByte. It is to be understood, though, that a larger memory could be employed as well.

If the measurement data from different GNSS receivers are to be compared, the data must be aligned in time or the measurements have to be synchronized. This is facilitated if the measurement data is stored at least at one of the assemblies.

Measurement data can be stored to a storage component before any position information has been created, even before a positioning has been initiated. In this case, a large amount of measurement data is available to begin with when a positioning is initiated. Using measurement data from past time instants for creating position information is also referred to as back tracking.

Storing measurement data in a memory also allows shortening the time required for producing relative position information, because sufficient measurement data is available immediately for the positioning calculations. Moreover, a memory allows improving the quality of the information in terms of accuracy and reliability while maintaining a short positioning time. The buffered measurement data makes it possible to collect measurement data before the standalone position solution has been calculated. Storing satellite signal related data to a memory facilitates as well a distribution or delivery of this data over any communication link and in any format to one or more recipients, like another assembly or some server. For example, a measurement set may be shared this way easily with any number of parties.

For exchanging data with the storage component, any type of connection can be used, like a cellular or a non-cellular connection. Further, any kind of message format can be used, like SMS, MMS, etc.

In a further embodiment of the first aspect , the wireless communication module comprises a user interface which is adapted to enable a user to control a positioning of the assembly. Such a user interface facilitates the use of a GNSS based positioning via a wireless communication module.

The control options offered by the user interface may comprise a control of a processing component which is adapted to determine at least a position of the assembly relative to at least one other assembly. The control options offered by the user interface may further comprise influencing the accuracy level of a positioning of the assembly. The control options offered by the user interface may further comprise adapting privacy settings, which enable a selection of other assemblies which are or which might be allowed to receive information relating to the location of the assembly.

As far as the user interface is employed for an exchange of signals or data, it may use a cellular link or another link, for example a GPRS connection, a data call connection, an SMS or an MMS connection, a Bluetooth™ connection, an Infrared connection, a WLAN connection and/or a fixed connection, for instance by means of a cable.

Since a relative positioning can be very precise, a user of the assembly might want to know exactly which physical point of the assembly is positioned. In a further embodiment, the assembly therefore comprises an indication of this particular physical point of the assembly. When a user is informed about this "positioning point" when measuring a distance, he/she will know exactly between which physical points the distance is measured.

The user interface can be implemented in particular in software, for instance in the wireless communication module.

In a further embodiment of the first aspect, a processing component of the assembly is adapted to evaluate navigation data which is available for a particular satellite. The navigation data may be used for supporting a signal acquisition of a satellite signal received by the global navigation satellite system receiver. The navigation data can be in particular long-term navigation data which is provided to the assembly by a positioning server. The use of long-term navigation data in a satellite signal acquisition has been described for example in US patent 6,587,789.

In a further embodiment of the first aspect , a processing component of the assembly is adapted to evaluate an available terrain model for a location at which the assembly is located. The terrain model may be used for supporting a signal acquisition of a satellite signal received by the global navigation satellite system receiver, a tracking of a satellite signal received by the global navigation satellite system receiver and/or the determination of a position of the assembly relative to at least one other assembly. A use of terrain models in the scope of a satellite based positioning has been described for example in US patents 6,429,814 and 6,590,530.

For the first aspect, further a system is proposed which comprises at least two of the proposed assemblies.

Optionally, this system comprises in addition a wireless communication network enabling a link between the assemblies.

Further optionally, the system comprises a positioning server, which is adapted to support a positioning of at least one of the assemblies.

In one embodiment of such a system comprising a positioning server, the server includes processing means which are adapted to regenerate available navigation data for a respective satellite and to provide this navigation data for supporting an acquisition of satellite signals. The regeneration may be carried out based on long-term observations of satellite signals. The regeneration of navigation data has been described for example in US patents 6,651,000, 6,542,820 and 6,411,892. The regeneration makes it possible to extend the usability of the navigation data and provides an alternative to known assistance data delivery methods.

In another embodiment of such a system, the server further comprises a memory adapted to store for further use navigation data for a respective satellite which has been regenerated by the processing means of the positioning server. The stored navigation data may be in particular long-term navigation data. Such long-term data and its use are described for example in US patent 6,560,534. The long-term data can be extracted from the server memory and be used by the server or be provided to an assembly.

For the first aspect , moreover a method for supporting a positioning of an assembly is proposed, which assembly comprises a GNSS receiver and a wireless communication module, wherein the GNSS receiver is adapted to receive signals from at least one satellite and wherein the wireless communication module is adapted to access a wireless communication network. The method comprises exchanging with at least one other assembly information on signals received from at least one satellite of a GNSS for enabling a determination of a position of the assembly relative to the at least one other assembly. Separate methods are proposed which comprise steps corresponding to the functions of the features of one or more of the presented embodiments of the proposed assembly. In particular, methods are proposed which comprise providing an API, providing a user interface and storing measurement data in a storage component, respectively. API and user interface can be provided for example by running a corresponding software.

For the first aspect, moreover a software code for supporting a positioning of an assembly is proposed, which assembly comprises a GNSS receiver and a wireless communication module, wherein the GNSS receiver is adapted to receive signals from at least one satellite and wherein the wireless communication module is adapted to access a wireless communication network. When running in a processing component of the assembly, the software code causing an exchange with at least one other assembly of information on signals received from at least one satellite of a GNSS for enabling a determination of a position of the assembly relative to the at least one other assembly. Separate software codes are proposed for realizing the functions of the features of any one of the presented embodiments of the proposed assembly. In particular, software codes are proposed which realizes the proposed API, which realizes the proposed user interface and which control a storage component storing measurement data, respectively.

II.

According to a second aspect, a positioning server supporting a positioning of assemblies is proposed. The assemblies are assumed to be adapted to receive signals from at least one satellite of a GNSS. The positioning server comprises communication means adapted to support a communication link to at least two assemblies. Further, the positioning server comprises a positioning support component adapted to receive from at least one first assembly information on received satellite signals and to forward the information to at least one second assembly for enabling the at least one second assembly to determine its position relative to the at least one first assembly. The positioning support component, which may also be realized as a dedicated module, may comprise for instance a processing component and a positioning support software run by this processing component.

This second aspect is based on the consideration that while the assemblies may communicate with each other for exchanging satellite signal related data, such a communication may require a complex and time-consuming message processing. It is therefore proposed that the assemblies communicate only with a correspondingly adapted positioning server for exchanging the information which is required for creating position information.

It is an advantage of this second aspect that a communication only with a positioning server is simpler and more time-efficient that a communication with one or even several other assemblies. Further, a positioning server enables an anonymous co-operation, that is, the users of the involved assemblies do not have to know each other. In a direct cellular or non-cellular communication, in contrast, this is indispensable. An anonymous co-operation also avoids the necessity for the assemblies to search for respective other assemblies which might be suited for and interested in a relative positioning.

The satellite signal related data may be exchanged using a specific format, for instance in the above mentioned RTCM format.

Information on the determined position can then be provided by the second assembly either directly to the first assembly or again via the positioning server. Some assemblies may be passive, that is, they only have to be able to deliver information on received satellite signals and to receive computed position information.

In one embodiment of the second aspect, the positioning server comprises moreover an assistance data component, which is adapted to provide assistance data to an assembly via the communication means for supporting a positioning of the assembly based on received satellite signals. If the assemblies are to function as conventional GNSS receivers as well, they need orbit information about satellites in order to create position information. In weak signal conditions, an assembly may not be able to retrieve this information from the navigation data in received satellite signals. The positioning server may therefore deliver assistance data, like ephemeris and almanac data in GPS, to the assemblies. This assistance data can include also other than orbit information, such as a reference time, a reference position or satellite integrity information. Assistance data is suited to speed up positioning and it may improve the sensitivity of a GNSS receiver. An assembly could also create assistance data and send it to the positioning server, for instance for use by other assemblies.

In another embodiment of the second aspect, the positioning server further comprises a privacy component adapted to determine the conditions under which data may be exchanged with a particular assembly by evaluating privacy setting provided by a user of this assembly. Since the server delivers messages from one assembly to another, it should account for privacy issues. If the user of a first assembly requests a relative positioning with a second assembly, the user of the second assembly must either have the user of the first assembly in a "friendly user" list or give permission to the first assembly. The second assembly can also have black list of users with whom he/she does not desire to co-operate in positioning. The positioning server can receive such privacy data from the assemblies for example as a part of positioning related messages, as a separate privacy message or by requesting it when required.

For the second aspect, further a system is proposed which comprises at least one positioning server according the second aspect of the invention and at least two assemblies, which assemblies are adapted to receive signals from at least one satellite of a GNSS system and which assemblies are adapted to establish a communication link with the at least one positioning server.

For the second aspect, moreover a method for supporting a positioning of assemblies is proposed. The assemblies are assumed to be adapted to receive signals from at least one satellite of a GNSS system. The method comprises at a positioning server receiving from at least one first assembly information on received satellite signals, and forwarding this information to at least one second assembly for enabling this at least one second assembly to determine its position relative to the at least one first assembly. Embodiments of the method may comprise additional steps which correspond to the functions of the features of one or more of the presented embodiments of the positioning server according to the second aspect of the invention.

For the second aspect, moreover software codes are proposed, which realize the functions of the proposed methods according to the second aspect of the invention when running in a processing component of a positioning server.

III.

According to a third aspect, a further positioning server supporting a positioning of assemblies is proposed. The assemblies are assumed again to be adapted to receive signals from at least one satellite of a GNSS system. The positioning server comprises communication means adapted to support a communication link to at least two assemblies and a positioning component adapted to receive from at least two assemblies information on received satellite signals and to calculate positions of the at least two assemblies relative to each other. The positioning component, which may also be realized as a dedicated module, may comprise for instance a processing component and a positioning software run by this processing component.

The third aspect proceeds from the consideration that positioning calculations for assemblies do not necessarily have to be carried out at an assembly, which might have limited processing and battery capacities, in particular if the assembly is a mobile assembly. It is proposed that a positioning server, which is able to communicate with at least two assemblies, comprises processing means for determining the relative positions of the two assemblies relative to each other based on information on satellite signals.

The third aspect has the advantage that it allows saving significant data processing capacity and time at the assemblies.

In one embodiment of the third aspect, the positioning component is further adapted to provide information on determined positions to at least one of the at least two assemblies and/or to a third party device. A third party could also communicate directly with an assembly. A positioning server facilitates a co-operation with a third party, though.

In another embodiment of the third aspect, the positioning component is further adapted to generate information relating to a movement of at least one of the at least two assemblies and to provide this additional information to at least one of the at least two assemblies and/or to a third party device.

A third party may use position and/or movement related data for offering various kinds of services or applications, including for instance mobile multi-user games.

For the third aspect, further a system is proposed which comprises at least one positioning server according the third aspect of the invention and at least two assemblies, which assemblies are adapted to receive signals from at least one satellite of a GNSS system and which assemblies are adapted to establish a communication link with the at least one positioning server.

For the third aspect, moreover a method for supporting a positioning of assemblies is proposed. The assemblies are assumed to be adapted to receive signals from at least one satellite of a GNSS system. The method comprises at a positioning server receiving from at least two assemblies information on received satellite signals, and calculating positions of these at least two assemblies relative to each other. Embodiments of the method may comprise additional steps which correspond to the functions of the features of one or more of the presented embodiments of the positioning server according to the third aspect of the invention.

For the third aspect, moreover software codes are proposed, which realize the functions of the proposed methods according to the third aspect of the invention when running in a processing component of a positioning server.

IV.

According to a fourth aspect, a stationary unit supporting a positioning of assemblies is proposed. The assemblies are assumed again to be adapted to receive signals from at least one satellite of a GNSS. The stationary unit comprises a positioning server, which is adapted to receive information on received satellite signals from a GNSS receiver arranged at a known location and from at least one assembly. The positioning server is moreover adapted to calculate an absolute position of the at least one assembly based on received information on satellite signals and on the known location of the GNSS receiver. The positioning calculations may be realized for instance by a processing component running a positioning software. Such a processing component may also be realized as a dedicated module.

The fourth aspect is based on the consideration that besides an accurate relative positioning, an accurate absolute positioning may be desired in many cases. It is therefore proposed that an accurate position of a reference location and information on satellite signals received at this location are made available to a server unit. The server unit is thereby able to determine the relative position between an assembly and this reference location and, based on the known accurate position of the reference location, an accurate absolute position of this assembly.

It is an advantage of the fourth aspect that it enables an absolute positioning of an assembly. An absolute positioning may serve users in many ways and it enables various applications. The proposed absolute positioning has further the advantage that an assembly does not depend on measurements by another assembly for determining its position. The only extra effort required consists in finding the exact position of at least one reference receivers.

In one embodiment of the fourth aspect, the stationary unit comprises the at least one GNSS receiver. The GNSS receiver is arranged at a known location and adapted to receive signals from at least one satellite of a GNSS and to provide information on received satellite signals to the positioning server. The GNSS receiver may be attached to the positioning server or integrated into the positioning server, but equally be located at a certain distance to the positioning server and be coupled the positioning server by means of any suitable communication link.

In a further embodiment of the fourth aspect , the positioning server of the proposed stationary unit is adapted to receive information on received satellite signals from a plurality of GNSS receivers, which may but do not have to form part of the proposed stationary unit. The positioning server may then be adapted to determine for the at least one assembly a closest one of the GNSS receivers. Further, it may be adapted to calculate the absolute position of the at least one assembly based on information on received satellite signals from the at least one assembly and from the determined closest GNSS receiver, and on information on the known location of this GNSS receiver.

The known reference location should not be too far away from the assembly which is to be positioned. When many GNSS receivers are coupled to a positioning server, thus a larger service area can be covered by a single positioning server.

For the fourth aspect , further a system is proposed which comprises at least one stationary unit according to the fourth aspect of the invention and at least one assembly, which is adapted to receive signals from at least one satellite of a GNSS and to establish a communication link to a positioning server of the at least one stationary unit.

For the fourth aspect , moreover a method for supporting a positioning of assemblies is proposed. The assemblies are assumed to be adapted to receive signals from at least one satellite of a GNSS. The proposed method comprises at a positioning server receiving from at least one assembly information on received satellite signals and receiving from at least one GNSS receiver arranged at a known location information on received satellite signals. The method further comprises calculating an absolute position of the at least one assembly based on the received information on satellite signals and on the known location of the global navigation satellite system receiver. Embodiments of the method may comprise additional steps which correspond to the functions of the features of one or more of the presented embodiments of the stationary unit according to the fourth aspect of the invention.

For the fourth aspect, moreover software codes are proposed, which realize the functions of the proposed methods according to the fourth aspect of the invention when running in a processing component of a positioning server of the stationary unit.

In a variation of the fourth aspect, the positioning server of the stationary unit does not determine the absolute position itself. Instead, it forwards the information on satellite signals received at the GNSS receiver together with information on the known location of the GNSS receiver to at least one assembly for enabling the assembly to determine its absolute position. The collecting and forwarding of information may be realized for instance by a processing component running a positioning support software. Such a processing component may also be realized as a dedicated module. It is to be understood that this variation can be implemented as well in a stationary unit, in a system, in a method and in a software code. Embodiments of these correspond to the embodiments described for the fourth aspect.

Concerning the variation of the fourth aspect it has to be noted, however, that a server may usually be provided with more computational power than, for instance, a wireless communication module of a mobile assembly.

V.

According to a fifth aspect , a positioning server network for supporting a positioning of assemblies is proposed. The assemblies are assumed to be adapted to receive signals from at least one satellite of a global navigation satellite system. The proposed positioning server network comprises a plurality of positioning servers adapted to communicate with each other. Each positioning server is further adapted to establish a connection to one or more of the assemblies. The communication may be realized in each positioning server for instance by a processing component running a positioning support software. Such a processing component may also be realized as a dedicated module.

The fifth aspect is based on the consideration that a positioning server may be limited with regard to its computational power, with regard to its coverage area and partly with regards to its facilities. It is therefore proposed that several positioning servers are connected to each other in a network, in which they may exchange information.

It is an advantage of the fifth aspect that a positioning server network enables a co-operation between positioning servers in many ways.

In one embodiment of the fifth aspect, each of the positioning servers of the network is adapted to perform positioning calculations for respectively connected assemblies based on information on satellite signals received by the assemblies. The limits of the computational power of a positioning server may be reached when it has to carry out position computations for many assemblies simultaneously. Therefore, at least one of the positioning servers is moreover adapted to perform as well at least a part of positioning calculations for assemblies connected to at least one other of the positioning servers. Thus, the positioning servers may share their computational load in case one of the positioning servers is loaded more than one of the other positioning servers.

In another embodiment of the fifth aspect, the positioning servers of the network are adapted to exchange among each other information on satellite signals received by assemblies connected to at least one of the positioning servers. Thus, assemblies connected to one of the positioning servers can be made visible to other positioning servers. As a result, assemblies connected to different positioning servers can position each other. Thus, the availability of a relative positioning is increased.

In another embodiment of the fifth aspect , the absolute position of at least one of the positioning servers of the network is available. Further, at least some of the positioning servers are adapted to receive signals from at least one satellite of a GNSS. If an absolute position of the positioning server to which an assembly is connected directly is not known, the assembly may thus request an absolute positioning from another positioning server of the network making use of determined relative positions between the positioning servers. This embodiment therefore makes absolute positioning more widely available.

For the fifth aspect, further a system is proposed which comprises a positioning server network according to the fifth aspect of the invention and at least one assembly. The assembly is adapted to receive signals from at least one satellite of a GNSS and to establish a communication link with a positioning server of the positioning server network.

For the fifth aspect, moreover a method for supporting a positioning of assemblies is proposed. It is assumed that the assemblies are adapted to receive signals from at least one satellite of a GNSS. The method comprises exchanging information among at least two positioning servers of a positioning server network for supporting a positioning at least one assembly, which is adapted to establish a communication link to one of the positioning servers. Embodiments of the method may comprise additional steps which correspond to the functions of the features of one or more of the presented embodiments of a positioning server of the network according to the fifth aspect.

For the fifth aspect, moreover a software code for supporting a positioning of assemblies is proposed, which assemblies are adapted to receive signals from at least one satellite of a global navigation satellite system. The software code realizes the following steps when running in a processing component of a positioning server of a positioning server network: exchanging information with at least one other positioning server of the positioning server network for supporting a positioning of at least one assembly, which is adapted to establish a communication link to a positioning server of the positioning server network. Embodiments of the software code may realize additional steps which correspond to the functions of the features of one or more of the presented embodiments of a positioning server of the network according to the fifth aspect.

VI.

The assembly of all aspects can be either a stationary unit or a mobile unit. The wireless communication module of all aspects of the invention can be for instance a cellular engine or terminal, or a WLAN engine or terminal, etc. A cellular terminal can be a cellular phone or any other type of cellular terminal, like a laptop which comprises means for establishing a link via a cellular network.

It is to be understood that any of the proposed software codes may be stored in a software program product.

The communication between any of the mentioned positioning servers and an assembly may be carried out using any type of wireless connection, for instance a data call connection, a GPRS connection or some other packet switched connection, an SMS connection, an MMS connection or a WLAN connection.

Beside the enabled absolute positioning, also the enabled relative positioning can be made use of in a great variety of situations. It can be employed, for example, for searching or locating a child or a friend in a crowd, etc. It can further be employed for locating a piece of equipment, like a car in a parking lot. It can further be employed for a close follow-up of a friend, of an athlete, of a competitor, or of a child, etc. For example, the route of a followed assembly can be made visible to a following mobile user on a display. The relative positioning can further be employed for measuring distances while planning constructions or building constructions, etc.

If the distance between two assemblies is known, users may also utilize this information to aid creation of position information. This applies especially in the case where the distance between two or more assemblies is zero or very close to zero.

In addition to precise distance measurements, the proposed relative positioning can be used to produce various other position related information as well. Such information may include for example precise direction measurements. For instance, azimuth and elevation angles to satellites can be determined precisely and be used for direction measurements. Other useful information includes angular velocity measurements, differential distance measurements, relative velocity measurements and absolute velocity measurements, in case one of the involved GNSS receivers is stationary. In addition, the enabled positioning can be used in an estimation of intersection points of trajectories, or in an estimation of time of collision or time of encounter of two assemblies.

An assembly may comprise for instance a software code which is adapted to estimate an absolute velocity of the assembly and/or of at least one other assembly, a relative velocity between the assembly and at least one other assembly, an angular velocity between the assembly and at least one other assembly, a trajectory of the assembly and/or at least one other assembly, a trajectory between the assembly and at least one other assembly, a time of encounter of the assembly and at least one other assembly, a location of encounter of the assembly and at least one other assembly, and/or a direction of motion of the assembly and/or at least one other assembly. The estimations can be presented for instance via a user interface to a user of the assembly, optionally in combination with a map, etc., or be used for some other purpose.

BRIEF DESCRIPTION OF THE FIGURES

Other objects and features of the present invention will become apparent from the following detailed description considered in conjunction with the accompanying drawings.

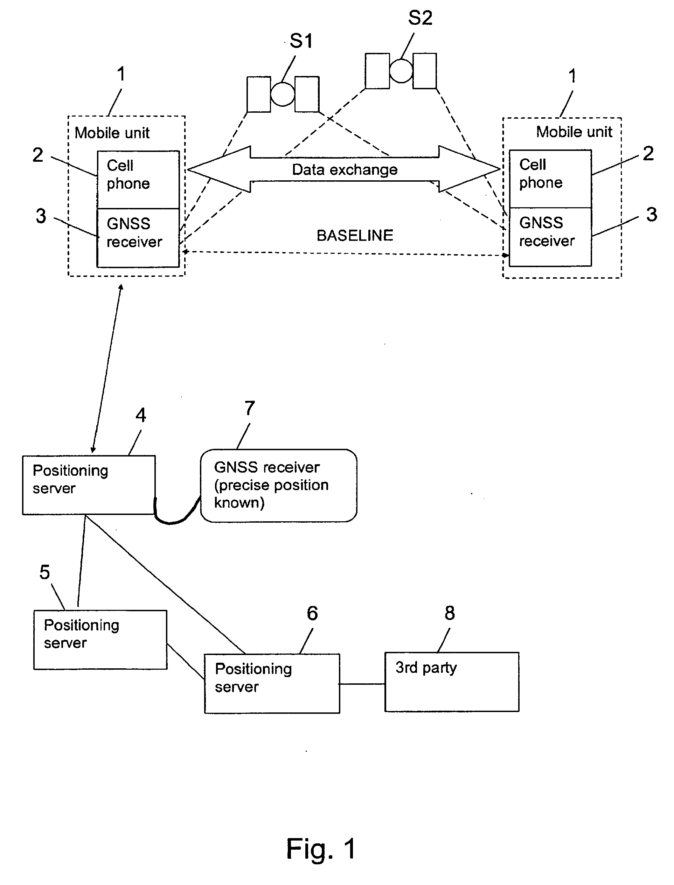

Fig. 1     is a schematic diagram of a system in accordance with an embodiment of the invention;
Fig. 2     is a flow chart illustrating a determination of a relative position in the system of Figure 1;
Fig. 3     is a schematic diagram illustrating a first option for forming a mobile unit in the system of Figure 1;
Fig. 4     is a schematic diagram illustrating a second option for forming a mobile unit in the system of Figure 1;
Fig. 5     is a schematic diagram illustrating a third option for forming a mobile unit in the system of Figure 1;
Fig. 6     is a schematic diagram illustrating a fourth option for forming a mobile unit in the system of Figure 1;
Fig. 7     is a schematic block diagram illustrating an API in a mobile unit in the system of Figure 1;
Fig. 8     is a schematic diagram illustrating a first approach of storing measurement data in a memory in the system of Figure 1;
Fig. 9     is a schematic diagram illustrating a second approach of storing measurement data in a memory in the system of Figure 1;
Fig. 10    is a schematic diagram illustrating a third approach of storing measurement data in a memory in the system of Figure 1;
Fig. 11    is a flow chart illustrating the use of a user interface in the system of Figure 1;
Fig. 12    is a schematic diagram illustrating a positioning point on a mobile unit in the system of Figure 1;
Fig. 13    is a schematic block diagram illustrating the use of a server for enabling a data exchange between mobile

EP 2 026 085 B1

units in the system of Figure 1;

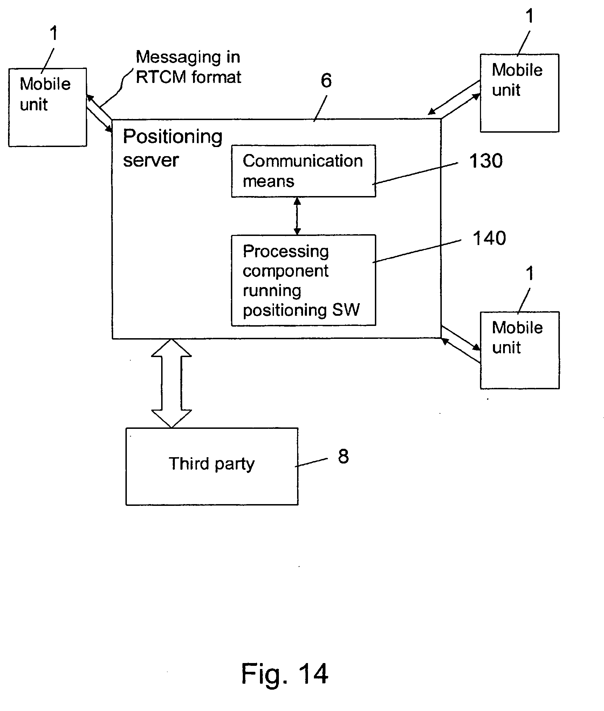

Fig. 14    is a schematic block diagram illustrating the use of a server providing computation capacities in the system of Figure 1;

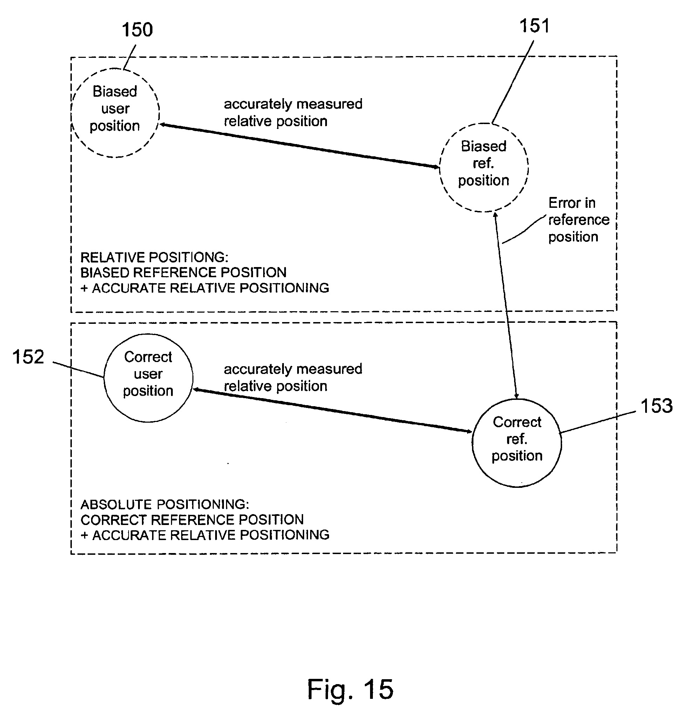

Fig. 15    is a schematic diagram comparing absolute and relative positioning;

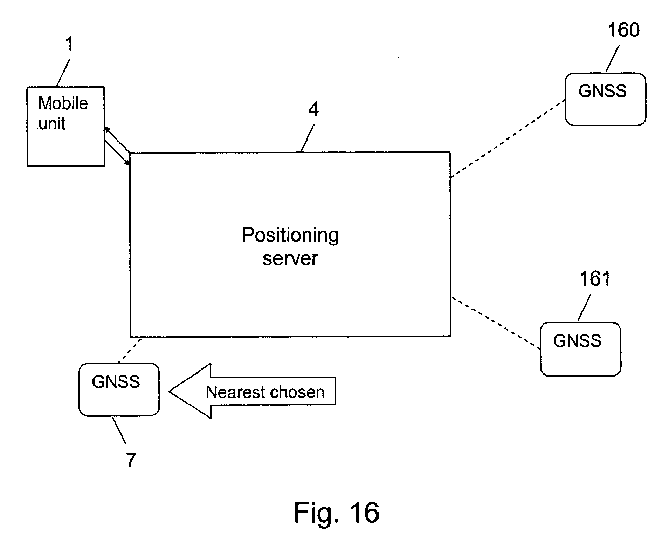

Fig. 16    is a schematic block diagram illustrating a support of an absolute positioning in the system of Figure 1;

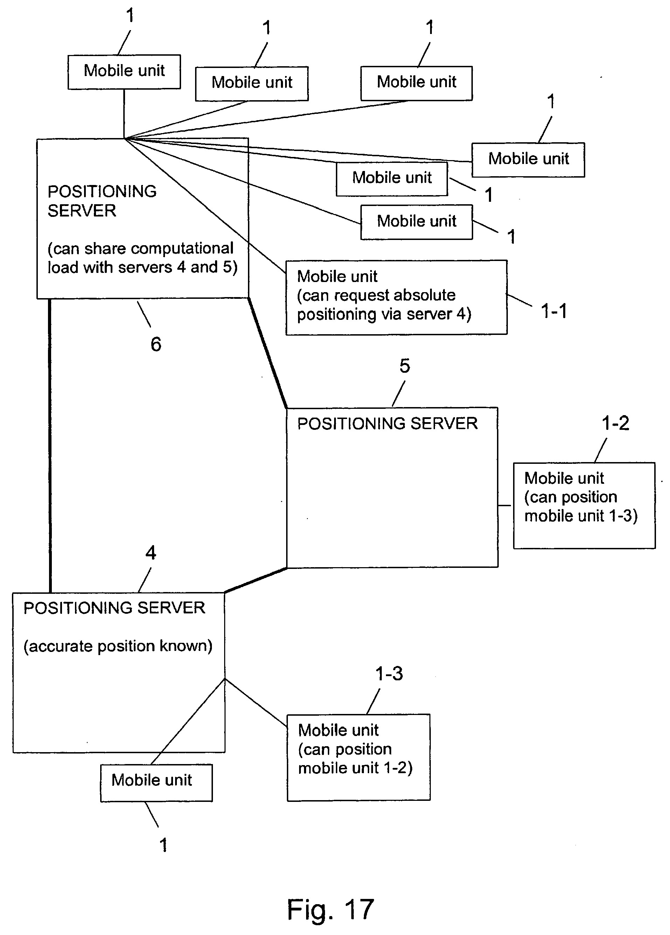

Fig. 17    is a schematic block diagram illustrating the use of a network of servers for a positioning in the system of Figure 1; and

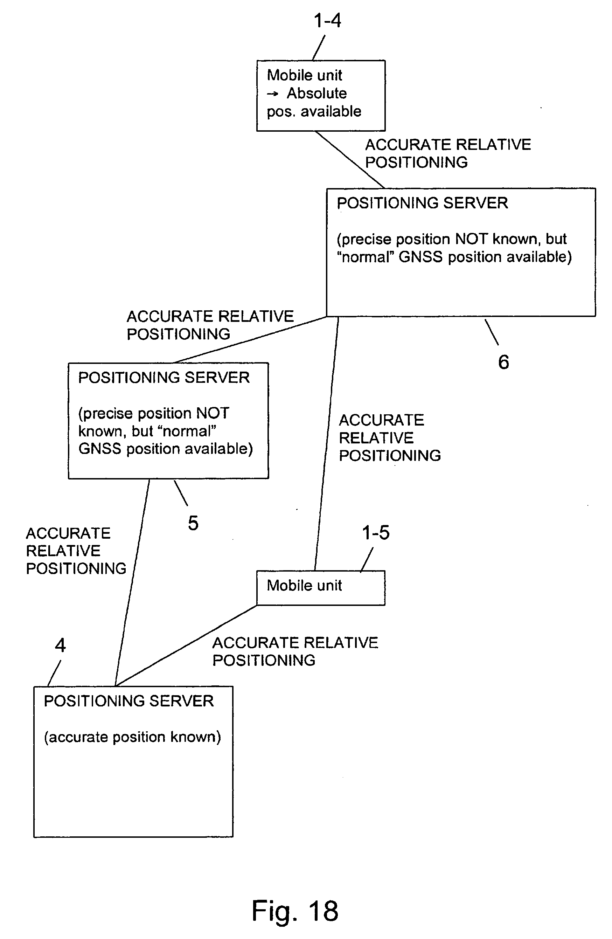

Fig. 18    is a schematic block diagram illustrating a chained determination of an absolute position in the system of Figure 1.

DETAILED DESCRIPTION OF THE INVENTION

Figure 1 presents an overview over a system in which the four aspects may be implemented by way of example. The system allows determining at least the relative position of a mobile unit.

The system comprises a plurality of mobile units 1, two of which are depicted in Figure 1. Each mobile unit 1 includes a cellular phone 2 and a GNSS receiver 3 coupled to each other. The GNSS receiver 3 is able to receive signals which are transmitted by satellites S1, S2 belonging to one or more GNSSs, like GPS and GALILEO. The GNSS receivers 3 of two mobile units 1 are spaced apart, for example, by 10 km. It is to be understood that also much larger distances are possible, like for instance 100 km, but the performance of a relative positioning can be expected to be the better, the shorter the distance. The distance is indicated in Figure 1 by a dashed baseline between the GNSS receivers 3. The cellular phones 2 of different mobile units 1 are able to communicate with each other using a cellular link or a non-cellular link.

The system moreover comprises a plurality of positioning servers 4, 5, 6 interconnected with each other. At least one of the mobile units 1 is able to access at least one of the servers 4. One of the servers 4 is linked in addition to a stationary GNSS receiver 7, which is arranged at a known location. Further, a third party device 8 may be coupled to one of the servers 6.

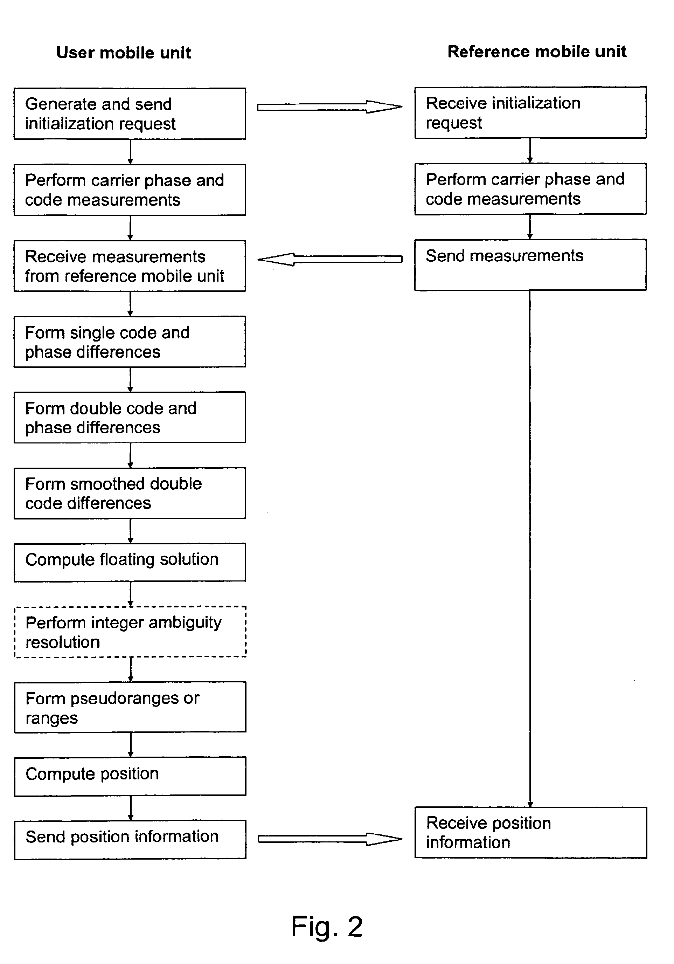

Different aspects which may be implemented in the system will now be described with reference to Figures 2 to 18.

Figure 2 is a flow chart illustrating an exemplary relative positioning of a mobile unit 1 in the system of Figure 1.

It is assumed that the relative position of a first mobile unit 1 compared to a second mobile unit 1 is to be determined. The operation of the first mobile unit, referred to as a user mobile unit, is presented on the left hand side of Figure 2. The operation of the second mobile unit, referred to as a reference mobile unit, is presented on the right hand side of Figure 2.

First, the user mobile unit generates and transmits an initialization request to the reference mobile unit. The request is received by the reference mobile unit.

The GNSS receivers 3 of both mobile units operate as normal GNSS receivers. That is, they acquire, track and decode satellite signals. Further, they are able to compute a stand-alone position in a known manner.

When an initialization request is transmitted, the GNSS receivers 3 of both mobile units moreover carry out code measurements and carrier phase measurements. These measurements are carried out at both mobile units for signals from at least two different satellites S1, S2.

The code measurements and the carrier phase measurements of the two mobile units must be aligned. That is, the measurements made at the user mobile unit at a particular time instant have to be aligned with the measurements made at the reference mobile unit at the same time instant. If this is not possible, then the measurements made at a specific time instant at one of the receivers must be extrapolated or interpolated, in order to synchronize them with the measurements of the other receiver.

The reference mobile unit sends the measurement results to the user mobile unit. The user mobile unit receives these measurement results and aligns them with its own measurement results. The aligned results are then used by the user mobile unit for forming new observables of the carrier and code measurements.

The user mobile unit forms to this end for each satellite signal single differences (SD) between the two mobile units. The single difference for the carrier phase of a particular satellite Sj is the difference between the carrier phase of the satellite Sj measured by the GNSS receiver 3 of the reference mobile unit and the carrier phase of the satellite Sj measured by the GNSS receiver 3 of the user mobile unit. Similarly, the single difference for the code of a particular satellite Sj is the difference between the code of the satellite Sj measured by the GNSS receiver 3 of the reference mobile unit and the code of the satellite Sj measured by the GNSS receiver 3 of the user mobile unit. Both can be summarized as follows:

$$SD(j) = signal\ (Sj{\rightarrow}GNSS\ receiver\ of\ user\ mobile\ unit)\ -$$
$$signal\ (Sj{\rightarrow}GNSS\ receiver\ of\ reference\ mobile\ unit)$$

where SD(j) is the single difference for carrier phase or code for a particular satellite Sj. In the example of Figure 1, j may assume the values 1 and 2.

Next, the user mobile unit forms double differences (DD) for code and carrier phase, respectively, by subtracting the single differences determined for different satellites Si, Sj from each other. This can be summarized as follows:

$$DD = SD(j)-SD(i)$$
$$= [signal\ (Sj{\rightarrow}GNSS\ receiver\ of\ user\ mobile\ unit)\ -\ signal$$
$$(Sj{\rightarrow}GNSS\ receiver\ of\ reference\ mobile\ unit)]\ -\ [signal$$
$$(Si{\rightarrow}GNSS\ receiver\ of\ user\ mobile\ unit)\ -\ signal\ (Si{\rightarrow}GNSS$$
$$receiver\ of\ reference\ mobile\ unit)],$$

where DD is the double difference for carrier phase or code for a particular pair of satellites Si and Sj. In the example of Figure 1, j may be equal to 1 and i equal to 2.

The double differences are then used to produce smoothed code measurements as known in the art.

Next, a floating solution is computed in a known manner. The floating solution can be further processed in an integer ambiguity resolution in a known manner. When ambiguities have been solved, a very accurate relative positioning can be performed. As ambiguity resolution is a time-consuming task, however, the floating solution may also be used directly. Therefore the step of performing an integer ambiguity resolution is indicated only with dashed lines in Figure 2. The accuracy which can be achieved using the floating solution is approximately 30 to 60 cm, while the accuracy which can be achieved with a successful additional integer ambiguity resolution is on a centimeter level.

The processing results can then be used to form pseudoranges or ranges and to compute therefrom the relative position of the user mobile unit in a known manner. The position information may finally be transmitted to and received by the reference mobile unit.

It is to be understood that the positioning could be expanded to more than two mobile units. In addition, signals originating from the same satellite but using different frequencies could be evaluated. Further, signals from more than two satellites could be evaluated.

The described transmissions between the user mobile unit and the reference mobile unit can make use of various communication links.

A non-cellular link, like a wireless LAN connection, a Bluetooth™ connection, a UWB connection or an infrared connection, could be used for example whenever possible. Whenever such a connection is problematic in a particular environment, a cellular link could be used instead. A cellular link relies on a regular connection between the cellular phones 2 of the mobile units 1 via a cellular communication network (not shown). A cellular link may make use, for example, of a data call connection, of a GPRS connection, in which the positioning data is inserted into data packages, of an SMS connection, of an MMS connection, or of a connection via a control channel. If more than two mobile units 1 are involved, also different types of links may be used between different mobile units.

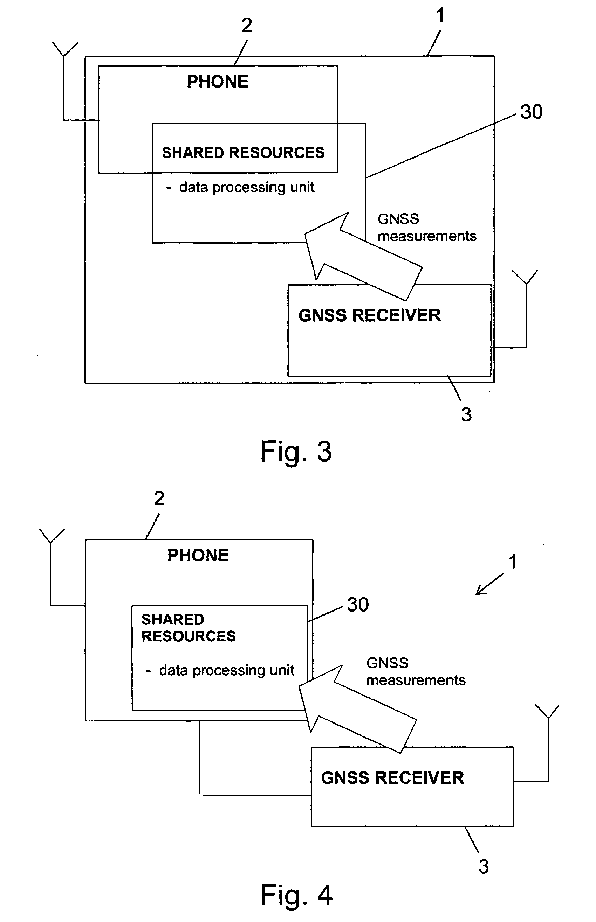

It has already been mentioned that the cellular phone 2 and the GNSS receiver 3 of a respective mobile unit 1 are coupled to each other. This can be achieved in various ways. Four different embodiments are presented in Figures 3 to 6.

As illustrated in Figure 3, the mobile unit 1 can be a single device in which the cellular phone 2 and the GNSS receiver 3 are integrated. The cellular phone 2 and the GNSS receiver 3 may moreover rely on shared resources 30 for the positioning, in particular on a shared data processing unit. The shared resources 30 may be resources included anyhow for the cellular phone, possibly adapted for positioning purposes, or resources provided specifically for positioning purposes. The GNSS receiver 3 will then provide GNSS measurement results to the shared resources 30 for processing. It is to be understood, however, that some data or signal processing has to be enabled in the GNSS receiver 3 nevertheless, if the GNSS receiver 3 is to operate as well as a conventional GNSS receiver.

As illustrated in Figure 4, the cellular phone 2 and the GNSS receiver 3 can equally be realized as separate devices. The GNSS receiver 3 could be realized for example as accessory device for the cellular phone 2. The GNSS receiver 3 is then coupled to the cellular phone 2 by some communication link. The communication link may be for instance a fixed cable, a Bluetooth™ connection, an infrared connection or an ultra wideband connection. Also in this case, the cellular phone 2 and the GNSS receiver 3 may employ shared resources 30 for the positioning. The shared resources can be in particular arranged in the cellular phone 2, to which the GNSS receiver 3 provides GNSS measurement results.

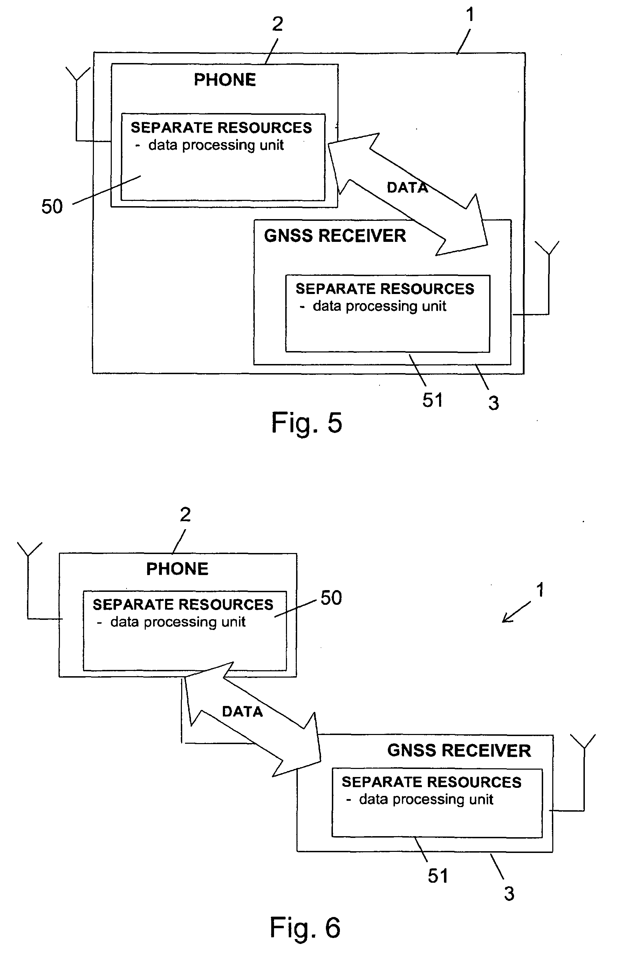

Figure 5 illustrates again a mobile unit 1 in which the cellular phone 2 and the GNSS receiver 3 are integrated into a single device. In this case, however, the cellular phone 2 and the GNSS receiver 3 comprise separate resources 50, 51 for the positioning, in particular separate data processing units. The separate resources 50, 51 my exchange processed data and commands, not exclusively measurement results.

Figure 6, finally, depicts again a cellular phone 2 and a GNSS receiver 3 as separate device. Similarly as in Figure 4, the cellular phone 2 and the GNSS receiver 3 comprise separate resources 50, 51 for the positioning, which exchange processed data and commands among each other.

It has to be noted that the mobile units 1 of the system of Figure 1 do not have to be realized all in the same way.

Within the mobile unit 1, the cellular phone 2 has to communicate with the GNSS receiver 3.

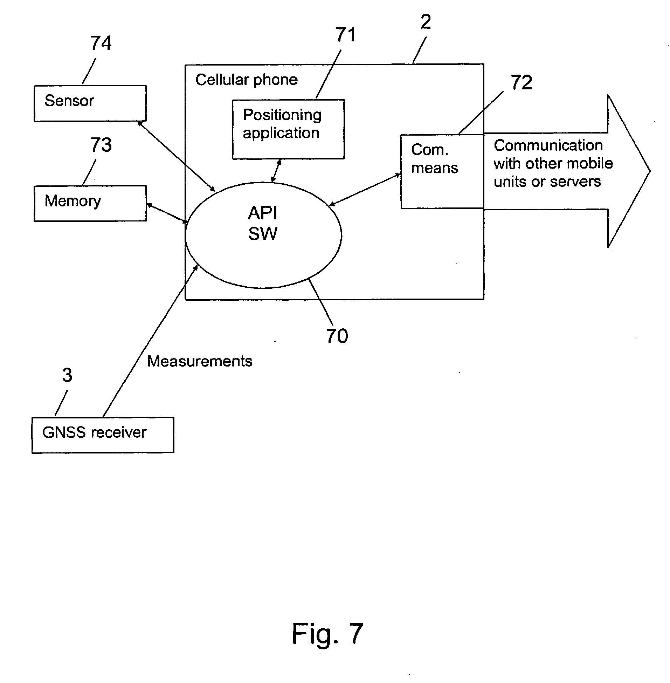

Figure 7 is a block diagram presenting an exemplary embodiment in which such a communication is enabled by a specific application program interface API.

In Figure 7, the cellular phone 2 of a mobile unit 1 comprises an API 70 realized in software. The API 70 is the interface of a positioning application 71 running in the cellular phone 2. Both applications 70, 71 may be run for example by a separate processing component 50 of the cellular phone 2. The positioning application 71 may realize for instance the computations described with reference to Figure 2. The cellular phone 2 moreover comprises communication means 72. The communication means 72 may comprise in particular a transmitter and a receiver enabling a communication via a cellular communication network. Further, it may comprise for instance an Infrared Transceiver, a Bluetooth™ transceiver, etc. Figure 7 presents in addition the GNSS receiver 3 of the same mobile unit 1, a memory 73 and a sensor 74. The sensor 74 can be for instance a barometer.

When the GNSS receiver 3 sends positioning related measurements in a specific format, for instance in RTCM format, to the cellular phone 2, the cellular phone 2 receives the messages and parses them using the API 70.

In addition, the API 70 enables the cellular phone 2 sending data via a cellular or a non-cellular connection to a positioning server 4, 5, 6 and/or to one or more other mobile units 1, making use of the communication means 72. Such data may comprise assistance data created by the positioning application 71 based on measurement data provided by the GNSS receiver 3. Further, the API 70 enables the cellular phone 2 receiving data from other mobile units 1 or from a positioning server 4, 5, 6 via a cellular or a non-cellular connection making use of the communication means 72. The API 70 may also enable receipt of measurement data from the sensor 74. Measurements by a barometer, for instance, provide an indication on the current altitude of the mobile unit 1, which can be used for aiding position computations by the positioning application 71. Moreover, the API 70 allows controlling position computations by the positioning application 71 and controlling a measurement memory 73.

The measurement memory 73 can be for instance part of the memory of the cellular phone 2. Alternatively, it can be part of a removable media like a memory card which can be flexibly inserted into the phone 2 and extracted again. Further alternatively, the measurement memory can be part of the GNSS receiver 3.

A measurement memory 73 can be used to store positioning related messages and/or positioning related data. Measurement results can also be stored to the memory 73 before any position information has been created in the cellular phone 2 and even before a positioning has been activated upon a request from the user or from a third party. This ensures that measurement results are already available when a positioning is activated. Using measurement results from past time instants for creating position information is also referred to as back tracking. In order to be able to perform a relative positioning, measurement results from two or more GNSS receivers 3 have to be aligned in time or synchronized, which may require extrapolation of measurement results or other adjustments of measurement results. This is facilitated when measurement results are stored beforehand in a memory which functions as a measurement buffer.

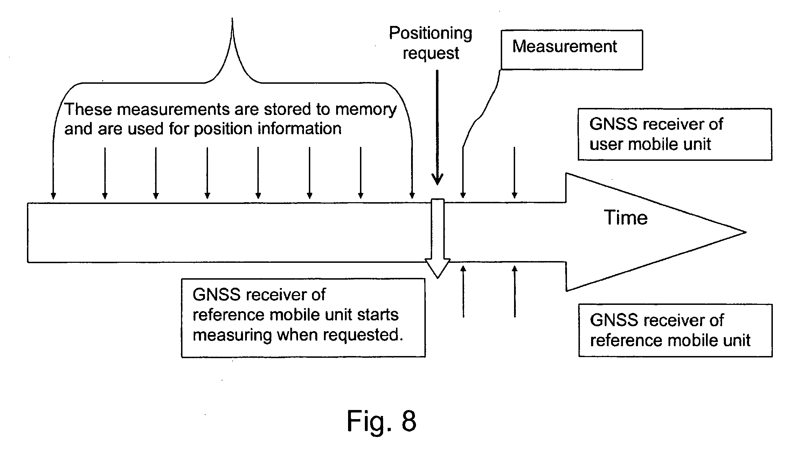

Figures 8 to 10 are diagrams illustrating by way of example various back tracking possibilities.

In the approach represented in Figure 8, the GNSS receiver 3 of a user mobile unit performs code and carrier phase measurements at regular intervals which are stored in a measurement memory 73. When a positioning is activated at a user mobile unit, an initialization request is transmitted to a reference mobile unit. Thereupon, also the GNSS receiver 3 of the reference mobile unit starts code and carrier phase measurements.

When the user mobile unit receives measurement data from the reference mobile unit, these are aligned with the measurement data stored in the memory 73. Both sets of measurement data are then used for creating position information as described with reference to Figure 2.

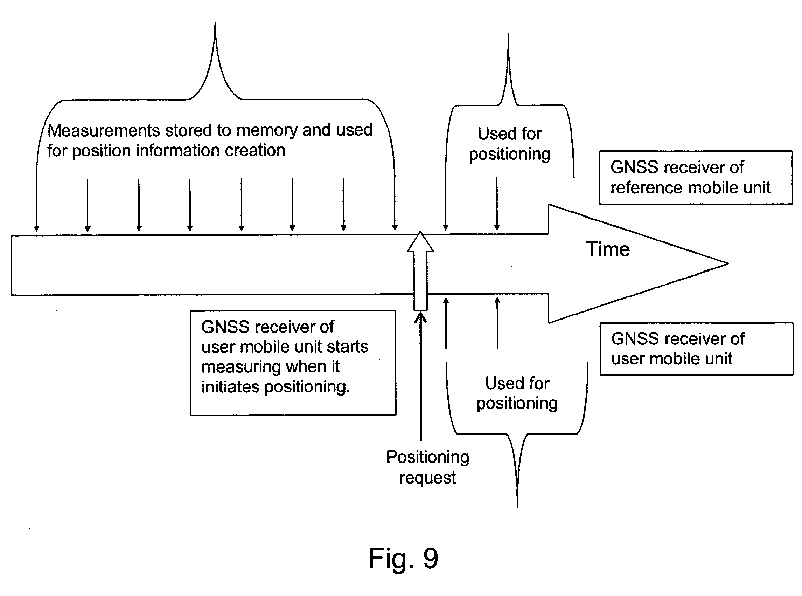

In the approach represented in Figure 9, the GNSS receiver 3 of a reference mobile unit 1 performs code and carrier phase measurements at regular intervals which are stored in a measurement memory 73. When a positioning is activated at a user mobile unit, an initialization request is transmitted to the reference mobile unit. At the same time, the GNSS receiver 3 of the user mobile unit starts code and carrier phase measurements. When receiving the initialization request, the reference mobile unit transfers stored measurement data and newly measurement data to the user mobile unit. The user mobile unit then uses the received measurement data and the own measurement data for creating position information as described with reference to Figure 2.

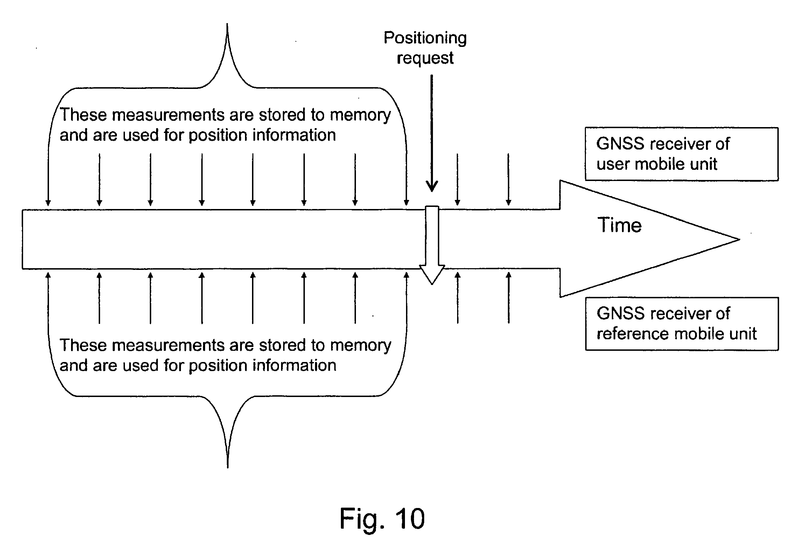

In the approach represented in Figure 10, the GNSS receiver 3 of a user mobile unit performs code and carrier phase measurements at regular intervals which are stored in a measurement memory 73. In addition, a GNSS receiver 3 of some reference mobile unit performs code and carrier phase measurements at regular intervals which are stored in a measurement memory. When a positioning is activated at the user mobile unit, an initialization request is transmitted to the reference mobile unit. Thereupon, the reference mobile unit transmits the stored measurement data to the user mobile unit. When the user mobile unit receives measurement data from the reference mobile unit, these are aligned with the measurement data stored in the memory 73 of the user mobile unit. Both sets of measurement data are then used for creating position information as described with reference to Figure 2.

The positioning of a mobile unit 1 may be activated and/or controlled, for instance, by a user of the user mobile unit by means of a user interface UI of the mobile unit.

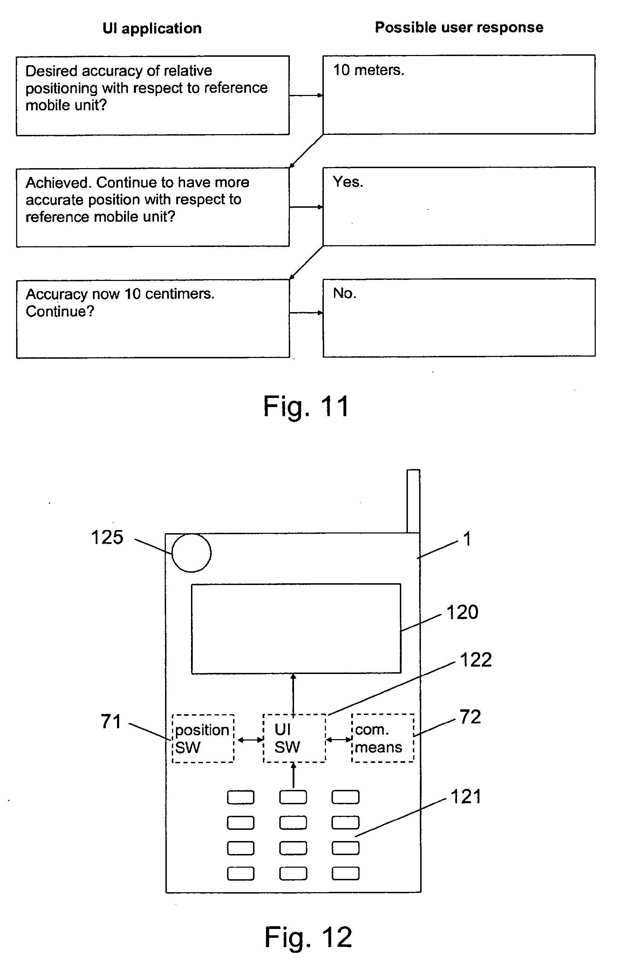

Figure 11 is a flow chart illustrating an exemplary dialogue between such a user interface and a user concerning the accuracy of a relative positioning. On the left hand side, options presented by the user interface on a display of the mobile unit are presented, while on the right hand side, possible selections by a user are indicated.

Before initializing the positioning, the user interface may inquire from the user the desired accuracy of the relative positioning. The user may select by way of example an accuracy of 10 m. When this accuracy is achieved, the user interface informs the user that the desired accuracy of 10 m has been achieved and inquires from the user whether a more accurate relative position is now to be determined. The user may now request by way of example a more accurate relative position. When a higher accuracy has been achieved, the user interface informs the user about the achieved accuracy, for example an accuracy of 10 cm. Further, the user interface inquires from the user whether a still more accurate relative position is to be determined. The user may now decline by way of example a more accurate positioning, and the positioning is terminated. By selecting the accuracy, the user may influence for instance the time which is required for the positioning.

The accuracy of a positioning can be varied by the mobile unit 1 for example by varying the number of considered frequencies, by varying the number of reference mobile units 1, by using or neglecting an integer ambiguity resolution, etc.

By means of the user interface, a user may thus set a desired accuracy level, for example a centimeter level, a decimeter level or an N-meter level, where N is a selectable integer number. Alternatively or in addition, a user may set the time that is to be used for the positioning, for instance a minimum, a maximum and a default time period. Further, the user may be enabled to define preferred actions which are to be carried out if the pre-set time is exceeded, or if a pre-set or a selected accuracy cannot be achieved. Once the desired accuracy level is achieved, the user interface may query whether the user wishes to continue to have a greater level of accuracy, as in the example of Figure 11.

Further user control options which may be supported by the user interface of a mobile unit 1 comprise, for example, requesting a relative positioning from a positioning server 4 or from at least one other mobile unit 1, showing a map or maps on a display of the cellular phone 2, locating the mobile unit 1 on a map which can be viewed on the display, downloading maps, downloading applications and data which can utilize relative positioning, downloading updates to a mobile positioning software, either for the cellular phone 2 or for the GNSS receiver 3, marking points of interests (POIs) on the display, marking the position of other mobile units 1 on the display, marking routes of the mobile unit 1 and routes of other mobile units 1 on the display as a part of a tracking functionality, downloading, using, and creating navigation directions like guiding directions, downloading and using other positioning applications, etc.

The user interface may also enable a user of a reference mobile unit to define different privacy settings. The user of a reference mobile unit can define, for example, to whom his/her relative position should be visible. In practice, this can be realized, for instance, by defining some other users as "friendly users". A "friendly user" does not have to ask permission to know the position of the reference mobile unit but is provided automatically with GNSS measurement results. If another user requesting GNSS measurement data is not a "friendly user", permission has to be asked from the user whose position is requested. This permission can be asked for via a communication connection and it can be shown on the display of the cellular phone 2 of the reference mobile unit. Certain users could also be defined to be "rejected users" to whom the position is not to be delivered in any case. Thereby, the user does not have to be bothered with their inquiries.

Figure 12 is a schematic diagram illustrating an exemplary integration of the user interface in a mobile unit 1.

The mobile unit 1 comprises a display 120 and a key pad 121 as a part of a cellular phone 2. Further, it comprises a UI application 122 receiving an input via the keypad 121 and presenting information and options via the display 120. The UI application 122 may be realized by a software running, for example, in shared or separate resources 30, 50 of the cellular phone 2. The UI application 122 is further able to provide commands to a positioning application 71 running in shared or separate resources 30, 50, 51, and to communicate with other devices via communication means 72 of the cellular phone 2. These communication means 72 may be the same as those used for the communication between a user mobile unit and a reference mobile unit described with reference to Figure 2. The communication means 72 may also enable cellular and/or non-cellular links of the same types as presented for the communication between a user mobile unit and a reference mobile unit.

An additional external part 125 of the user interface is given by a simple presentation of a physical point on the mobile unit 1, which represents the exact portion of the mobile unit 1 which is positioned based on the GNSS measurements. This information is of importance for a positioning which has an accuracy on a centimeter level.

While Figures 2 to 12 relate to embodiments of the mobile units 1 of the system of Figure 1, Figures 13 to 18 relate to the possible interaction of mobile units 1 with one or more positioning servers 4, 5, 6 of the system of Figure 1. It has to be noted, however, that an interaction with such positioning servers is not required for the proposed positioning but enables additional options.

As mentioned above, the mobile units 1 can communicate directly with each other using a cellular or a non-cellular link.

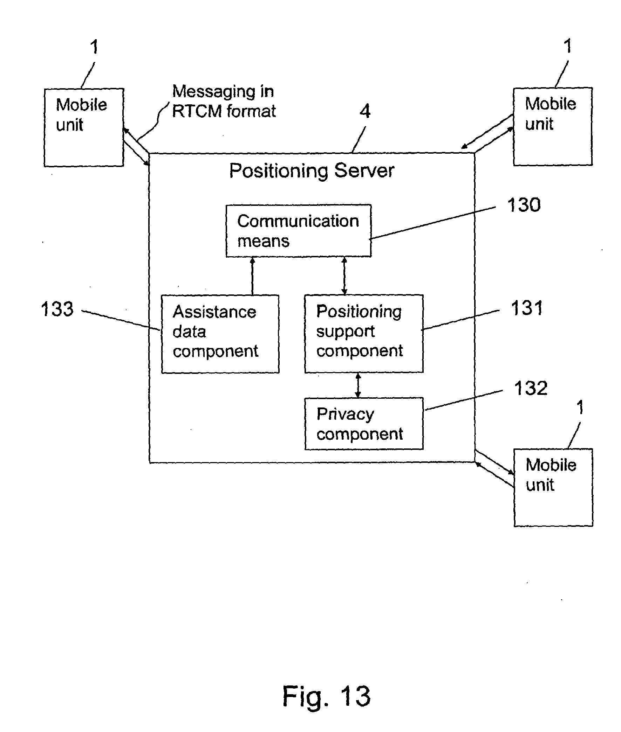

Figure 13 is a block diagram presenting an exemplary alternative embodiment, in which each mobile unit 1 only has to establish a connection with a positioning server 4 for exchanging measurement data.

The positioning server 4 comprises communication means 130 which enable a communication with a plurality of mobile units 1, for example in form of a data call connection, a GPRS connection, an SMS connection, an MMS connection or a WLAN connection. Each of the mobile units 1 comprises corresponding communication means. In addition, the positioning server 4 comprises a positioning support component 131, a privacy check component 132 and an assistance data component 133. Each of these components 131, 132, 133 comprises at least a software running in a processing unit of the server 4.

When a user mobile unit 1 is interested in participating in a positioning, it notifies the positioning server 4 and provides its location. The positioning server 4 responds with an acknowledgement message. The mobile unit 1 sends thereupon GNSS measurement data to the positioning server 4, for example in RTCM format. The positioning server 4 then forwards GNSS measurement data from other mobile units 1 to the user mobile unit 1. Any data exchange is carried out in the positioning server 4 via its communication means 130 and any positioning related processing is carried out by the positioning support component 131. Upon receipt of GNSS measurement data from other mobile units 1 via the positioning server 4, the user mobile unit 1 performs the computations described with reference to Figure 2 in order to determine its relative position.

The determined position information can then be delivered by the user mobile unit 1 to the positioning server 4, which forwards the position information to other involved mobile units 1 which do not perform position calculations themselves. Alternatively, the user mobile unit 1 may send the determined position information as well directly to another mobile unit 1. Some mobile units 1 may thus be passive mobile units 1 which only provide GNSS measurement data but which do not carry out any relative positioning computations themselves.

The privacy component 132 is provided, because the positioning server 4 delivers confidential information between the mobile units 1. The privacy component 132 comprises in addition to a software a storage space. In this storage space, it stores for each mobile unit 1 a "friendly user" list and a "rejected user" list. These lists are made use of by the positioning support component 131 of the positioning server 4 similarly as described above for corresponding lists stored by a mobile unit 1. A mobile unit 1 can provide a positioning server 4 via the communication means 130 with privacy data as a part of the messages transmitted for positioning, as a dedicated privacy message and/or upon request by the positioning server 4. The privacy component 132 is addressed thereupon for instance by the positioning support component 130 receiving this privacy data.

The assistance data component 133 generates assistance data including for instance ephemeris and almanac data of a GPS system, reference time, reference position or satellite integrity information, and provides it upon request to a mobile unit 1 via the communication means 130. A mobile unit 1 may make use of such information in normal satellite positioning. Alternatively, mobile units 1 might create assistance data and provide it to the positioning server 4.

In another exemplary embodiment, a positioning server is not limited to forward positioning related messages between mobile units. It may also create itself position information for a particular set of mobile units in order to reduce the processing load at the mobile units. This is illustrated in Figure 14.

Figure 14 presents a positioning server 6, a plurality of mobile units 1 linked to the positioning server 6, and a third party device 8 which is equally linked to the positioning server 6.

The positioning server 6 comprises communication means 130 and a processing component 140.

A positioning of mobile units 1 may be initialized by a request by one of the mobile units 1 or by a request by the third party device 8. The request is received at the positioning server 6 via the communication means 130 and forwarded to the processing component 140. The processing component 140 requests and receives thereupon GNSS measurement data from a plurality of mobile units 1 via the communication means 130. The processing component 140 runs a positioning software which determines the relative positions of the mobile units 1 among each other and sends the position information via the communication means 130 to the involved mobile units 1 and/or to the third party device 8. Determining the relative positions includes for instance determining single differences, determining double difference, forming smoothed double code differences, compute a floating solution, perform an integer ambiguity resolution, form pseudoranges or ranges and compute the relative positions, as described with reference to Figure 2. A third party device 8 can use the resulting information to offer different services or applications. Alternatively, a third party device 8 could also communicate directly with the mobile units 1 in order to receive information on their relative positions.

In addition the processing component 140 may create and provide other information on the mobile units 1, for example the absolute and/or relative velocity, the angular velocity, the estimated trajectory, time and/or location of estimated encounters and/or the direction of a mobile unit 1.

It is to be understood that the processing component 140 may also run any software belonging to a positioning support component 131, the privacy component 132 and the assistance data component 133 of Figure 13, as well as any other software implemented in a processing server.

Up to now, only a relative positioning of mobile units 1 has been dealt with. In some embodiments of the invention, however, also a reliable absolute positioning is enabled.

Figure 15 illustrates the difference between relative and absolute positioning.

In the upper half of Figure 15, the position 150 of a user mobile unit and the assumed position 151 of a reference mobile unit are indicated. In accordance with the approach presented with reference to Figure 2, an accurate relative position of the user mobile unit compared to the reference mobile unit can be determined. If the reference mobile unit only has biased information on its position 151 available, however, also any absolute position 150 of the user mobile unit which can be determined based on the relative positioning will be biased.

In the lower half of Figure 15, the position 152 of a user mobile unit and the known position 153 of a reference mobile unit are indicated. In accordance with the approach presented with reference to Figure 2, an accurate relative position of the user mobile unit compared to the reference mobile unit can be determined. Here, the reference mobile unit is moreover assumed to have accurate information available on its position 153. Therefore, the correct position 152 of the user mobile unit can be determined based on the correct position of the reference mobile unit and the determined accurate relative position.

The error between the biased reference position 151 in the upper half of Figure 15 compared to the correct reference position 153 in the lower half of Figure 15 is indicated by an arrow. This error results in exactly the same error in the user mobile unit position 150 compared to the accurate user mobile unit position 152.

Figure 16 is a diagram illustrating an exemplary embodiment of the invention in which an accurate absolute position of a mobile unit can be determined.

Figure 16 presents a positioning server 4, to which a plurality of GNSS receivers 7, 160, 161 are coupled. The GNSS receivers 7, 160, 161 can be physically coupled to the positioning server 4 or be located farther away. Further, a mobile unit 1 is linked to the positioning server 4.

The precise location of the GNSS receivers 7, 160, 161 is known at the positioning server 4. The positioning server 4 moreover has access to GNSS measurements performed at these GNSS receivers 7, 160, 161.

When a mobile unit 1 transmits an initialization request to the positioning server 4, the positioning server 4 first determines the GNSS receiver 7 which is located closest to the mobile unit 1.

The positioning server 4 then receives GNSS measurement data from various linked mobile units 1 and retrieves measurement data from the closest GNSS receiver 7. Based on the received measurement data, the positioning server 4 determines the relative position of the mobile units 1. In addition, the positioning server 4 determines the relative position of one of the mobile units 1 relative to the GNSS receiver 7. Based on the precisely known location of the GNSS receiver 7, the positioning server 4 is now able to calculate in addition the absolute position of the mobile units 1. Since the accuracy of the relative positioning can be very high, the accuracy of the calculated absolute positions of the mobile units 1 depends on the accuracy of the known position of the GNSS receiver 7.

Alternatively, the positioning server 4 could only gather all required information and provide it to one of the mobile units 1 for performing the computations, similarly as described with reference to Figure 13.

Finally, the positioning may also make use of a network of interconnected positioning servers 4, 5, 6, as illustrated by way of example in Figures 1, 17 and 18.

Figure 17 presents a network of three interconnected positioning servers 4, 5, 6, which may be for instance the same as presented in Figure 1. The positioning servers 4, 5, 6 may be interconnected, for example, using an Internet connection, a GPRS connection or a WLAN connection, etc. Each of the positioning servers 4, 5, 6 is able to carry out positioning computations for attached mobile units 1 as described with reference to Figure 14.

To one of the positioning servers 6, a large number of mobile units 1 is connected, including mobile unit 1-1. To another one of the positioning servers 5, only a single mobile unit 1, mobile unit 1-2, is connected. To the third positioning server 4, two mobile units 1 are connected, including mobile unit 1-3.

Due to the unequal distribution of mobile units 1 to the positioning servers 4, 5, 6, positioning server 6 may share its computational load with positioning servers 4 and 5.

Further, the positioning servers 4, 5, 6 may share positioning information among each other, in order to enable a relative positioning of mobile units 1 connected to different positioning servers 4, 5, 6. In Figure 17, for instance mobile units 1-2 and 1-3 might determine their relative position making use of the link between positioning server 4 and positioning server 5 for exchanging the required GNSS measurement data provided by mobile unit 1-2 and mobile unit 1-3.

An absolute positioning of a mobile unit may be supported even if neither the accurate position of the positioning server to which the mobile unit is linked, nor the accurate position of a GNSS receiver connected to this positioning server is known. An absolute positioning can be achieved in this case using the network, if the accurate position of any one of the positioning servers or the accurate position of a GNSS receiver attached to any one of the positioning servers is known, as will be explained in more detail with reference to Figure 18.

Figure 18 presents again a network of three positioning servers 4, 5, 6. Each of the positioning servers 4, 5, 6 comprises a GNSS receiver (not shown) which enables GNSS measurements at the location of the respective server. In addition, the precise absolute position of one of the positioning servers 4 is known.

A first mobile unit 1-4 is connected to positioning server 6. A second mobile unit 1-5 may be connected to positioning server 6 and to positioning server 4.

Now, the accurate absolute position of mobile unit 1-4 is to be determined.

In one alternative, the accurate position of positioning server 4 relative to the position of positioning server 5 is determined based on GNSS measurements, similarly as described with reference to Figure 2. In addition, the accurate position of positioning server 6 relative to the position of positioning server 5 is determined based on GNSS measurements, similarly as described with reference to Figure 2. In addition, the accurate position of mobile unit 1-4 relative to the position of positioning server 6 is determined based on GNSS measurements, similarly as described with reference to Figure 2. Based on the resulting total relative position of the mobile unit 1-4 compared to the position of positioning server 4, and on the known absolute position of positioning server 4, the exact absolute position of mobile unit 1-4 can be determined.

In another alternative, the accurate position of mobile unit 1-5 relative to the position of positioning server 4 is determined based on GNSS measurements. In addition, the accurate position of positioning server 6 relative to the position of mobile unit 1-5 is determined based on GNSS measurements. In addition, the accurate position of mobile unit 1-4 relative to the position of positioning server 6 is determined based on GNSS measurements. Based on the resulting total relative position of the mobile unit 1-4 compared to the position of positioning server 4 and on the known absolute position of positioning server 4, the exact absolute position of mobile unit 1-4 can be determined, for instance by a processing component of positioning server 4 or by a processing component of positioning server 6.

Moreover, when there are many positioning servers 4, 5, 6 and many mobile units 1 connected to these positioning servers 4, 5, 6, a large amount of measurement data can be gathered in the network. This data can be used for modeling the atmosphere and parts of it, for modeling the troposphere, for modeling the ionosphere, etc.

It is to be noted that the described embodiments constitute only selected ones of a variety of possible embodiments. Further, any of the described embodiments can be used separately or in combination with at least one other of the described embodiments.

**Claims**

1. A method comprising:

   - receiving at a mobile device (1) a request from a positioning server (6) to provide code and carrier-phase measurements on satellite signals, wherein said request is applicable for requesting code and carrier-phase measurements on satellite signals of any of a plurality of global navigation satellite systems; and
   - providing upon said request code and carrier-phase measurements for transmission to said positioning server (6).

2. An apparatus (1, 30) for a mobile device (1) comprising:

   - a processing component (30) configured to receive a request from a positioning server to provide code and carrier-phase measurements on satellite signals, wherein said request is applicable for requesting code and carrier-phase measurements on satellite signals of any of a plurality of global navigation satellite systems; and
   - a processing component (30) configured to provide upon said request code and carrier-phase measurements for transmission to said positioning server (6).

3. A mobile device (1) comprising an apparatus (30) according to claim 2.

4. The mobile device (1) according to claim 3, wherein said mobile device is a cellular phone or a mobile unit comprising a cellular phone (2).

5. A software code realizing the method of claim 1 when executed by a processing component.

**6.** A method comprising at a positioning server (6):

- providing a request for code and carrier-phase measurements on satellite signals for transmission to a mobile device (1), wherein said request is applicable for requesting code and carrier-phase measurements on satellite signals of any of a plurality of global navigation satellite systems; and
- receiving code and carrier-phase measurements in response to said request.

**7.** An apparatus (6, 140) for a positioning server (6) comprising:

- a processing component (140) configured to provide a request for code and carrier-phase measurements on satellite signals for transmission to a mobile device (1), wherein said request is applicable for requesting code and carrier-phase measurements on satellite signals of any of a plurality of global navigation satellite systems; and
- a processing component (140) configured to receive code and carrier-phase measurements in response to said request.

**8.** A server (6) comprising an apparatus (140) according to claim 7.

**9.** A software code realizing the method of claim 6 when executed by a processing component (140).


**Patentansprüche**

**1.** Verfahren, umfassend:

- Empfangen einer Anforderung von einem Positionierserver (6) an einem mobilen Gerät (1), Code und Trägerphasenmesswerte zu Satellitensignalen bereitzustellen, wobei die Anforderung anwendbar ist, um Code und Trägerphasenmesswerte zu Satellitensignalen irgendeines Systems aus einer Mehrzahl globaler Navigationssatellitensysteme anzufordern; und
- Bereitstellen von Code und Trägerphasenmesswerten zur Übertragung an den Positionierserver (6) auf die Anforderung hin.

**2.** Vorrichtung (1, 30) für ein mobiles Gerät (1), umfassend:

- eine Verarbeitungskomponente (30), die konfiguriert ist, eine Anforderung von einem Positionierserver zu empfangen, Code und Trägerphasenmesswerte zu Satellitensignalen bereitzustellen, wobei die Anforderung anwendbar ist, um Code und Trägerphasenmesswerte zu Satellitensignalen irgendeines Systems aus einer Mehrzahl globaler Navigationssatellitensysteme anzufordern; und
- eine Verarbeitungskomponente (30), die konfiguriert ist, auf die Anforderung hin Code und Trägerphasenmesswerte zur Übertragung an den Positionierserver (6) bereitzustellen.

**3.** Mobiles Gerät (1), umfassend eine Vorrichtung (30) nach Anspruch 2.

**4.** Mobiles Gerät (1) nach Anspruch 3, wobei das mobile Gerät ein Mobiltelefon oder eine ein Mobiltelefon (2) umfassende mobile Einheit ist.

**5.** Softwarecode, der bei Ausführung durch eine Verarbeitungskomponente das Verfahren nach Anspruch 1 realisiert.

**6.** Verfahren, umfassend an einem Positionierserver (6):

- Bereitstellen einer Anforderung von Code und Trägerphasenmesswerten zu Satellitensignalen zur Übertragung an ein mobiles Gerät (1), wobei die Anforderung anwendbar ist, um Code und Trägerphasenmesswerte zu Satellitensignalen irgendeines Systems aus einer Mehrzahl globaler Navigationssatellitensysteme anzufordern; und
- Empfangen von Code und Trägerphasenmesswerten in Antwort auf die Anforderung.

**7.** Vorrichtung (6, 140) für einen Positionierserver (6), umfassend:

- eine Verarbeitungskomponente (140), die konfiguriert ist, eine Anforderung von Code und Trägerphasenmesswerten zu Satellitensignalen zur Übertragung an ein mobiles Gerät (1) bereitzustellen, wobei die Anforderung anwendbar ist, um Code und Trägerphasenmesswerte zu Satellitensignalen irgendeines Systems aus einer Mehrzahl globaler Navigationssatellitensysteme anzufordern; und

- eine Verarbeitungskomponente (140), die konfiguriert ist, Code und Trägerphasenmesswerte in Antwort auf die Anforderung zu empfangen.

**8.** Server (6), umfassend eine Vorrichtung (140) nach Anspruch 7.

**9.** Softwarecode, der bei Ausführung durch eine Verarbeitungskomponente (140) das Verfahren nach Anspruch 6 realisiert.

**Revendications**

**1.** Procédé consistant à :

- recevoir, dans un dispositif mobile (1), une demande d'un serveur de positionnement (6) pour fournir des mesures de code et de phase de porteuse concernant des signaux de satellites, dans lequel ladite demande est applicable pour demander des mesures de code et de phase de porteuse concernant les signaux de satellites de l'un quelconque d'une pluralité de systèmes mondiaux de navigation par satellites ; et

- fournir, lors de ladite demande, des mesures de code et de phase de porteuse pour une transmission au dit serveur de positionnement (6).

**2.** Appareil (1, 30) pour un dispositif mobile (1) comprenant :

- un composant de traitement (30) configuré pour recevoir une demande d'un serveur de positionnement pour fournir des mesures de code et de phase de porteuse concernant des signaux de satellites, dans lequel ladite demande est applicable pour demander des mesures de code et de phase de porteuse concernant les signaux de satellites de l'un quelconque d'une pluralité de systèmes mondiaux de navigation par satellites ; et

- un composant de traitement (30) configuré pour fournir, lors de ladite demande, des mesures de code et de phase de porteuse pour une transmission au dit serveur de positionnement (6).

**3.** Dispositif mobile (1) comprenant un appareil (30) selon la revendication 2.

**4.** Dispositif mobile (1) selon la revendication 3, dans lequel ledit dispositif mobile est un téléphone cellulaire ou une unité mobile comprenant un téléphone cellulaire (2).

**5.** Code de logiciel réalisant le procédé de la revendication 1 lorsqu'il est exécuté par un composant de traitement.

**6.** Procédé consistant, dans un serveur de positionnement (6), à :

- fournir une demande de mesures de code et de phase de porteuse concernant des signaux de satellites pour une transmission à un dispositif mobile (1), dans lequel ladite demande est applicable pour demander des mesures de code et de phase de porteuse concernant les signaux de satellites de l'un quelconque d'une pluralité de systèmes mondiaux de navigation par satellites ; et

- recevoir des mesures de code et de phase de porteuse en réponse à ladite demande.

**7.** Appareil (6, 140) pour un serveur de positionnement (6) comprenant :

- un composant de traitement (140) configuré pour fournir une demande de mesures de code et de phase de porteuse concernant des signaux de satellites pour une transmission à un dispositif mobile (1), dans lequel ladite demande est applicable pour demander des mesures de code et de phase de porteuse concernant les signaux de satellites de l'un quelconque d'une pluralité de systèmes mondiaux de navigation par satellites ; et

- un composant de traitement (140) configuré pour recevoir des mesures de code et de phase de porteuse en réponse à ladite demande.

**8.** Serveur (6) comprenant un appareil (140) selon la revendication 7.

**9.** Code de logiciel réalisant le procédé de la revendication 6 lorsqu'il est exécuté par un composant de traitement (140).

Fig. 1

**User mobile unit**                                    **Reference mobile unit**

| Generate and send initialization request | ⟹ | Receive initialization request |

Perform carrier phase and code measurements

Receive measurements from reference mobile unit ⟸

Form single code and phase differences

Form double code and phase differences

Form smoothed double code differences

Compute floating solution

Perform integer ambiguity resolution

Form pseudoranges or ranges

Compute position

Send position information ⟹ Receive position information

| Perform carrier phase and code measurements |

| Send measurements |

# Fig. 2

Fig. 3

Fig. 4

**Fig. 5**

**Fig. 6**

74

Sensor

73

Memory

3

GNSS receiver

Cellular phone

71

Positioning application

2

72

Com. means

Communication with other mobile units or servers

API SW

70

Measurements

Fig. 7

Measurement

GNSS receiver of
user mobile unit

Time

GNSS receiver of
reference mobile unit

Positioning
request

These measurements are stored to memory
and are used for position information

GNSS receiver of
reference mobile unit starts
measuring when requested.

Fig. 8

Measurements stored to memory and used
for position information creation

Used for
positioning

GNSS receiver of
reference mobile unit

Time

GNSS receiver of
user mobile unit starts
measuring when it
initiates positioning.

GNSS receiver of
user mobile unit

Used for
positioning

Positioning
request

Fig. 9

Positioning
request

These measurements are stored to memory
and are used for position information

GNSS receiver of
user mobile unit

Time

GNSS receiver of
reference mobile unit

These measurements are stored to memory
and are used for position information

Fig. 10

EP 2 026 085 B1

| UI application | Possible user response |
|---|---|
| Desired accuracy of relative positioning with respect to reference mobile unit? | 10 meters. |
| Achieved. Continue to have more accurate position with respect to reference mobile unit? | Yes. |
| Accuracy now 10 centimers. Continue? | No. |

## Fig. 11

125

1

120

122

72

71

position SW    UI SW    com. means

121

## Fig. 12

1

Mobile
unit

Messaging in
RTCM format

4

1

Mobile
unit

Positioning Server

Communication
means

130

133

Assistance
data
component

Positioning
support
component

131

Privacy
component

132

1

Mobile
unit

Fig. 13

Fig. 14

150

151

Biased
user
position

accurately measured
relative position

Biased
ref.
position

Error in
reference
position

RELATIVE POSITIONG:
BIASED REFERENCE POSITION
+ ACCURATE RELATIVE POSITIONING

152

Correct
user
position

accurately measured
relative position

Correct
ref.
position

153

ABSOLUTE POSITIONING:
CORRECT REFERENCE POSITION
+ ACCURATE RELATIVE POSITIONING

Fig. 15

EP 2 026 085 B1

Fig. 16

Fig. 17

1-4

Mobile unit
→ Absolute
pos. available

ACCURATE RELATIVE
POSITIONING

POSITIONING SERVER

(precise position NOT known, but
"normal" GNSS position available)

6

ACCURATE RELATIVE
POSITIONING

POSITIONING SERVER

(precise position NOT
known, but "normal"
GNSS position available)

ACCURATE
RELATIVE
POSITIONING

5

1-5

ACCURATE
RELATIVE
POSITIONING

Mobile unit

4

ACCURATE RELATIVE
POSITIONING

POSITIONING SERVER

(accurate position known)

Fig. 18

## REFERENCES CITED IN THE DESCRIPTION

### Patent documents cited in the description

- US 6229479 B1
- WO 2004063763 A
- US 5519620 A
- US 5841396 A
- US 6002363 A
- US 5535432 A
- US 6587789 B
- US 6429814 B
- US 6590530 B
- US 6651000 B
- US 6542820 B
- US 6411892 B
- US 6560534 B

### Non-patent literature cited in the description

- *RTCM Recommended Standards for Differential GNSS Service,* 15 January 1998